# EUROPÄISCHE PATENTSCHRIFT

(11) **EP 3 620 422 B1**
(45) Veröffentlichungstag und Bekanntmachung des Hinweises auf die Patenterteilung: **21.05.2025**
(21) Anmeldenummer: 19184898.5
(22) Anmeldetag: 08.07.2019
(51) Int. Cl.: B66F 9/06

(54) **FAHRERLOSER TRANSPORTER**
DRIVERLESS TRANSPORTER
TRANSPORTEUR SANS CONDUCTEUR

(30) Priorität: 06.09.2018 DE 102018121743
(43) Veröffentlichungstag der Anmeldung: 11.03.2020
(73) Patentinhaber: Liebherr-Verzahntechnik GmbH, 87437 Kempten (DE)
(72) Erfinder: Mattern, Thomas, 87669 Rieden (DE)
(74) Vertreter: Behr, Wolfgang

(56) Entgegenhaltungen:
- EP-A2- 0 302 205
- EP-A2- 0 872 445
- US-A1- 2018 169 944

## Beschreibung

Die vorliegende Erfindung betrifft einen fahrerlosen Transporter mit einem Fahrgestell, einem Antrieb und einer Steuerung, zum Transport von Transportgut.

Fahrerlose Transportsysteme mit einer Mehrzahl von fahrerlosen Transportern werden zunehmend zur Automatisierung von Transportprozessen z.B. innerhalb von Logistikzentren eingesetzt.

Weiterhin gibt es erste Versuche, fahrerlose Transportsysteme innerhalb von Fertigungsanlagen einzusetzen, um Werkstücke zwischen einzelnen Stationen der Fertigung zu transportieren.

Allerdings konnte noch keine zufriedenstellende Lösung gefunden werden, wie solche fahrerlosen Transportsysteme eingesetzt werden können, um eine Übergabestation, bspw. in Form einer Werkzeugmaschine und/oder eines Speichers, mittels eines fahrerlosen Transporters unmittelbar, d. h. ohne eine Zwischenschaltung einer stationären Handlinganordnung wie bspw. eines Roboters, zu beschicken.

Insbesondere sind Versuche, Gabelstapler als fahrerlose Transporter einzusetzen und auf der Gabel abgelegte Werkstücke an eine Übergabestation zu übergeben, mit dem Problem behaftet, dass die für die Übergabe notwendige Relativbewegung über das Fahrwerk des Gabelstaplers erzeugt werden muss.

Ein fahrerloser Transporter gemäß dem Oberbegriff von Anspruch 1 ist aus EP 302 205 A2 bekannt.

Weitere fahrerlose Transporter sind in EP 872 445 A2 und US 2018 / 169944 A1 gezeigt.

Aufgabe der vorliegenden Erfindung ist es, einen verbesserten fahrerlosen Transporter und ein entsprechendes fahrerloses Transportsystem zur Verfügung zu stellen.

Diese Aufgabe wird durch einen fahrerlosen Transporter gemäß Anspruch 1 und ein fahrerloses Transportsystem gemäß Anspruch 9 gelöst.

Vorteilhafte Ausgestaltungen der vorliegenden Erfindung sind Gegenstand der Unteransprüche.

Die vorliegende Erfindung umfasst einen fahrerlosen Transporter mit einem Fahrgestell, einem Antrieb und einer Steuerung, zum Transport von Transportgut, insbesondere zur Beschickung einer Übergabestation mit einem oder mehreren Werkstücken. Der fahrerlose Transporter weist erfindungsgemäß eine Handling-Anordnung mit einem Teleskopauszug zum Bewegen des Transportgutes in horizontaler Richtung auf. Die Handling-Anordnung mit dem Teleskopauszug erlaubt eine einfachere Übergabe des Transportgutes von dem Transporter an eine Übergabestation und/oder eine einfachere Übernahme des Transportgutes von einer Übergabestation auf den Transporter. Insbesondere erlaubt es die Handling-Anordnung mit dem Teleskopauszug, Transportgut zu übergeben und/oder zu übernehmen, ohne dass hierfür das Fahrwerk betätigt werden müsste, d. h. die Übergabe bzw. Übernahme kann bei stehendem Transporter allein über Bewegungsachsen der Handling-Anordnung erfolgen.

Der fahrerlose Transporter dient insbesondere dem Transport von Werkstücken und/oder Paletten für Werkstücke in einer Fertigungsanlage.

**In** einer möglichen Ausgestaltung der vorliegenden Erfindung umfasst die Handling-Anordnung weiterhin eine Hebevorrichtung zum Bewegen des Transportgutes in vertikaler Richtung.

Bevorzugt ist die Hebevorrichtung so angeordnet, dass der Teleskopauszug durch die Hebevorrichtung angehoben wird. Die Hebevorrichtung kann hierfür auf dem Fahrgestellt montiert sein und ihrerseits den Teleskopauszug tragen.

Beispielsweise kann die Hebevorrichtung als Hebebühne ausgestaltet sein, auf welcher der Teleskopauszug montiert ist.

In einer möglichen Ausgestaltung der vorliegenden Erfindung ist der Teleskopauszug so an dem fahrerlosen Transporter angeordnet, dass das Transportgut in Draufsicht bei eingezogenem Teleskopauszug innerhalb der durch das Fahrgestell und/oder ein Chassis des Transporters definierten Grundfläche des Transporters angeordnet ist und durch Ausziehen des Teleskopauszugs seitlich neben die Grundfläche bewegbar ist.

Der Teleskopauszug stellt in seiner eingezogenen Position bevorzugt eine Transportposition für das Transportgut zur Verfügung, in welcher das Transportgut in Draufsicht innerhalb der durch das Fahrgestell und/oder ein Chassis des Transporters definierten Grundfläche des Transporters angeordnet ist. Hierdurch wird ein Umkippen des Transporter während des Transportes auch ohne Gegengewichte, wie sie z.B. bei Gabelstaplern zwingend notwendig sind, verhindert. Zudem wird die Verletzungs- und/oder Kollisionsgefahr während des Transportes verringert.

Bevorzugt verbleibt das Transportgut während des Transports am Teleskopauszug. Alternativ oder zusätzlich kann der Transporter jedoch auch einen Ablageplatz für das Transportgut aufweisen.

Bevorzugt befindet sich der Teleskopauszug in der eingezogenen Stellung komplett oberhalb und/oder innerhalb eines Gehäuses des Transporters und bildet daher keine Störkante beim Transport.

Ein Ausziehen des Teleskopauszugs erlaubt es bevorzugt, das Transportgut vom Bereich des Transporters seitlich in eine Übergabeposition zu verbringen, in welcher es sich im Bereich einer Übergabestation befindet.

In einer möglichen Ausgestaltung der vorliegenden Erfindung ist an dem Teleskopauszug ein Handling-Element zum Greifen und/oder Aufnehmen des Transportguts angeordnet. Das Handling-Element kann insbesondere an einem austeleskopierbaren Schienenelement des Teleskopauszugs angeordnet sein. Bei dem Handling-Element handelt es sich beispielsweise um einen Greifer und/oder eine Gabel.

Der Teleskopauszug kann in einer möglichen Ausgestaltung zwei Teleskopschienen aufweisen, an welchen das Handling-Element angeordnet ist.

In einer möglichen Ausgestaltung der vorliegenden Erfindung weist die Handling-Anordnung mindestens eine weitere Bewegungsachse zur Bewegung des Transportgutes in einer horizontalen Ebene auf.

Insbesondere handelt es sich bei der weiteren Bewegungsachse um eine vertikale Drehachse und/oder ein Quershuttle.

Die weitere Bewegungsachse ist bevorzugt so angeordnet, dass sie den Teleskopauszug bewegt. Insbesondere erlaubt die weitere Bewegungsachse dabei eine Bewegung quer zur Auszugsrichtung des Teleskopauszugs.

Bevorzugt ist die weitere Bewegungsachse zwischen der Hebevorrichtung und dem Teleskopauszug angeordnet.

In einer möglichen Ausgestaltung der vorliegenden Erfindung weist die Handling-Anordnung mindestens zwei Teleskopauszüge auf. Die Verwendung zweier Teleskopauszüge erlaubt es beispielsweise, durch nur einen Transporter ein bearbeitetes Werkstück durch ein noch unbearbeitetes Werkstück zu ersetzen.

In einer möglichen Ausgestaltung der vorliegenden Erfindung weisen die Teleskopauszüge parallele Auszugsrichtungen auf.

Je nach Ausgestaltung können die beiden Auszüge nebeneinander, übereinander oder fluchtend zueinander angeordnet sein.

In einer möglichen Ausgestaltung der vorliegenden Erfindung weist der Transporter mindestens einen und bevorzugt mindestens zwei Ablageplätze für Transportgut auf.

Bevorzugt sind die Bewegungsachsen der Handling-Anordnung so ausgeführt, dass Transportgut mittels des Teleskopauszugs auf einem Ablageplatz ablegbar und/oder von diesem aufnehmbar ist. Der oder die Ablageplätze können dem Transport des Transportgutes oder als eine Zwischenablage während des Beschickens einer Übergabestation dienen.

In einer möglichen Ausgestaltung der vorliegenden Erfindung ist der Teleskopauszug über eine vertikale Drehachse zu dem Ablageplatz und/oder den Ablageplätzen hin verschwenkbar. Beispielsweise kann die vertikale Drehachse genutzt werden, um den Teleskopauszug zwischen zwei Ablageplätzen hin und her zu verschwenken.

Gemäß der vorliegenden Erfindung umfasst der fahrerlose Transporter weiterhin eine Kopplungseinrichtung zur mechanischen Koppelung des Transporters an eine Übergabestation. Eine solche Kopplungsanordnung kann eingesetzt werden, da für die Übergabe des Transportgutes keine Verfahrbewegung des Transporter notwendig ist.

Die Kopplungseinrichtung dient in einer möglichen Ausgestaltung der Zentrierung und/oder der Abstützung des Transporters. Insbesondere definiert die Kopplungseinrichtung eine feste Position des Transporters gegenüber der Übergabestation und/oder verhindert ein Umkippen des Transporters, wenn das Transportgut durch Ausziehen des Teleskopauszugs aus der durch das Fahrgestell und/oder ein Chassis des Transporters definierten Grundfläche heraus verschoben wird.

Insbesondere kann die Kopplungseinrichtung Führungsbereiche umfassen, durch welche der Transporter bei einer Verfahrbewegung zu einer definierten Position geführt wird.

Alternativ oder zusätzlich kann die Kopplungsanordnung eine formschlüssige Verbindung in zumindest einer Richtung erlauben.

In einer möglichen Ausgestaltung der vorliegenden Erfindung ist ein Sensor zum Erfassen der Kopplung vorgesehen.

In einer möglichen Ausgestaltung der vorliegenden Erfindung ist die Steuerung so eingerichtet, dass ein Transportgut durch den Teleskopauszug erst nach erfolgter Kopplung nach außerhalb der Grundfläche des Transporters bewegbar ist.

Alternativ oder zusätzlich ist der Teleskopauszug erst nach erfolgter Kopplung ausziehbar.

Durch beide Maßnahmen wird die Betriebssicherheit erheblich erhöht, da ein Umkippen des Transporters und/oder Kollisionen mit dem Teleskopauszug und/oder dem Transportgut während des Transports vermieden werden.

Bei dem Antrieb des Transporters kann es sich insbesondere um einen Fahrantrieb handeln, welcher zusammen mit dem Fahrgestell ein verfahren des Transporters erlaubt. Der Fahrantrieb wird bevorzugt von der Steuerung angesteuert.

Der Teleskopauszug weist bevorzugt einen Antrieb auf, welcher von der Steuerung angesteuert wird und über welchen der Teleskopauszug bewegt wird. Als Antrieb kann beispielsweise ein Motor vorgesehen sein, welcher mit einem Riemenantrieb mit Mitnehmer zusammenwirkt. Alternativ sind andere Linearantriebe einsetzbar, bspw. in Form eines Zylinders und/oder Elektromechanischen Linearantriebs.

Bevorzugt weisen auch die Hebevorrichtung und/oder die weiteren Bewegungsachsen Antriebe auf, welche von der Steuerung angesteuert werden.

Die Steuerung kann mit einem übergeordneten Leitsystem kommunizieren und durch diese angesteuert werden und/oder von diesem Aufträge und/oder Befehle erhalten.

Die vorliegende Erfindung umfasst weiterhin ein fahrerloses Transportsystem mit mindestens einem fahrerlosen Transporter, wie er oben näher beschrieben wurde, sowie mindestens einer Übergabestation.

**In** einer möglichen Ausgestaltung der vorliegenden Erfindung sind der fahrerlose Transporter und die Übergabestation so ausgestaltet, dass durch den Transporter transportiertes Transportgut mittels des Teleskopauszugs von einer Transportposition im Bereich des Transporters zu einer Übergabeposition im Bereich der Übergabestation verbringbar ist und/oder Transportgut aus einer Übergabeposition im Bereich der Übergabestation mittels des Teleskopauszugs zu einer Transportposition im Bereich des Transporters verbringbar ist.

Insbesondere kann der Transporter dabei in eine Beschickungsposition neben der Übergabestation verfahren werden und das Übergeben und/oder Übernehmen des Transportgutes in die und/oder aus der Übergabestation dabei mittels des Teleskopauszuges erfolgen.

Insbesondere kann das Transportgut dabei mittels des Teleskopauszugs über Elemente der Übergabestation hinweg zu der Übergabeposition bewegt werden.

In einer möglichen Ausgestaltung der vorliegenden Erfindung handelt es sich bei der Übergabestation um eine Werkzeugmaschine. Der fahrerlose Transporter kann so zum Beschicken der Werkzeugmaschine mit Werkstücken eingesetzt werden.

In einer möglichen Ausgestaltung der vorliegenden Erfindung ist das System so ausgelegt, dass das Werkstück durch den fahrerlosen Transporter unmittelbar an eine Bearbeitungsposition übergeben wird und/oder unmittelbar aus einer Bearbeitungsposition übernommen wird, beispielsweise unmittelbar in eine Werkstückaufnahme übergeben wird und/oder unmittelbar aus einer Werkstückaufnahme übernommen wird, in welcher das Werkstück auch bearbeitet wird. Hierdurch muss die Werkzeugmaschine keine zur Bearbeitungsposition separate Übergabeposition umfassen, welche das Werkstück übernimmt und von welcher das Werkstück zu einer Bearbeitungsposition bewegt wird.

In einer möglichen Ausgestaltung der vorliegenden Erfindung ist das System so ausgelegt, dass das Werkstück durch den fahrerlosen Transporter an eine Übergabeposition der Werkzeugmaschine übergeben und/oder von einer solchen übernommen wird, wobei das Werkstück von einer Automation des Werkzeugmaschine von der Übergabeposition in eine Bearbeitungsposition verbracht wird und umgekehrt.

In einer möglichen Ausgestaltung der vorliegenden Erfindung handelt es sich bei der Übergabestation um eine Materialschleuse. Beispielsweise kann die Materialschleuse die Übergabe von Transportgut wie bspw. Werkstücken in einen von einer Sicherheitsumzäunung umgebenden Bereich und/oder die Übernahme von Transportgut wie bspw. Werkstücken aus einem solchen Bereich erlauben.

In einer möglichen Ausgestaltung der vorliegenden Erfindung handelt es sich bei der Übergabestation um einen Speicher und/oder ein Lagerregal. Die Übergabe und/oder Übernahme kann auch hier unmittelbar in Speicherplätze und/oder Regalplätze erfolgen, und/oder zu einer Übergabeposition, von wo aus das Transportgut durch eine Automation des Speichers und/oder Lagerregals in Speicherplätze und/oder Regalplätze verbracht wird.

Gemäß der vorliegenden Erfindung weist die Übergabestation eine Kopplungsanordnung zur mechanischen Ankopplung des Transporters auf.

Die Kopplungsanordnung dient bevorzugt der Zentrierung und/oder der Abstützung des Transporters. Besonders bevorzugt ist diese so ausgestaltet, dass sie ein Kippen des Transporters bei einem Ausziehen des Teleskopauszugs verhindert.

In einer möglichen Ausgestaltung der vorliegenden Erfindung wird der Transporter bevorzugt so angesteuert, dass er in einem ersten Schritt mittels des Fahrgestells in eine Beschickungsposition verfährt und in einem zweiten Schritt ohne eine Betätigung des Fahrgestells eine Übergabe von Transportgut in die Übergabestation vornimmt, insbesondere durch Bewegungsachsen der Handling-Anordnung, insbesondere durch Betätigung des Teleskopauszugs und/oder der Hebevorrichtung.

In einer möglichen Ausgestaltung der vorliegenden Erfindung werden Ungenauigkeiten beim Erreichen der Beschickungsposition durch mindestens eine weitere Bewegungsachse des Transporters ausgeglichen, insbesondere durch ein Quershuttle und/oder eine vertikale Drehachse.

Die Ansteuerung des Transporters erfolgt bevorzugt automatisch. Die Ansteuerung kann über die Steuerung des Transporters und/oder durch ein übergeordnetes Leitsystem erfolgen.

Das fahrerlose Transportsystem umfasst in einer möglichen Ausgestaltung mehrere fahrerlose Transporter.

Das fahrerlose Transportsystem umfasst in einer möglichen Ausgestaltung mehrere Übergabestationen, insbesondere mehrere Übergabestationen, wie sie oben beschrieben wurden. Insbesondere können ein Speicher und/oder Lagerregal und/oder eine oder mehrere Werkzeugmaschinen durch das fahrerlose Transportsystem miteinander verbunden sein.

Die vorliegende Erfindung umfasst weiterhin ein Verfahren zum Betrieb eines fahrerlosen Transportsystems mit mindestens einem fahrerlosen Transporters und mindestens einer Übergabestation, wie sie oben beschrieben wurden, mit den Schritten:
- Verfahren eines fahrerlosen Transporters in eine Beschickungsposition, in welcher der Transporter neben einer Übergabestation angeordnet ist,
- Betätigen des Teleskopauszugs zur Beschickung der Übergabestation mit Transportgut und/oder zur Entnahme von Transportgut aus der Übergabestation.

**In** einer möglichen Ausgestaltung der vorliegenden Erfindung ist vorgesehen, dass der Transporter der Übergabestation in einem ersten Schritt ein bearbeitetes Werkstück entnimmt und in einem zweiten Schritt ein nicht bearbeitetes Werkstück übergibt, wobei bevorzugt zwischen den beiden Schritten keine Bewegung des Transporters über sein Fahrgestell erfolgt und/oder der Transporter fest in seiner Beschickungsposition verbleibt.

Gemäß der vorliegenden Erfindung ist vorgesehen, dass der Transporter in der Beschickungsposition mechanisch mit der Übergabestation gekoppelt wird.

Bevorzugt ist das fahrerlose Transportsystem so ausgestaltet, dass das erfindungsgemäße Verfahren automatisch durchgeführt wird.

Die vorliegende Erfindung wird nun anhand von Zeichnungen und Ausführungsbeispielen näher erläutert.

Dabei zeigen:
- Fig. 1:: ein erstes Ausführungsbeispiel eines fahrerlosen Transportsystems in einer perspektivischen Darstellung,
- Fig. 2a/b/c:: das erste Ausführungsbeispiel in einer ersten Seitenansicht, einer zweiten Seitenansicht und einer Draufsicht,
- Fig. 3:: ein zweites Ausführungsbeispiel eines fahrerlosen Transportsystems in einer perspektivischen Darstellung,
- Fig. 4a/b/c:: das zweite Ausführungsbeispiel in einer ersten Seitenansicht, einer zweiten Seitenansicht und einer Draufsicht,
- Fig. 5:: ein drittes Ausführungsbeispiel eines fahrerlosen Transportsystems in einer perspektivischen Darstellung,
- Fig. 6a/b/c:: das dritte Ausführungsbeispiel in einer ersten Seitenansicht, einer zweiten Seitenansicht und einer Draufsicht,
- Fig. 7:: die Entnahme eines Werkstücks aus einer Übergabestation durch einen erfindungsgemäßen fahrerlosen Transporter,
- Fig. 8:: ein erstes Ausführungsbeispiel eines Systems aus einem fahrerlosen Transporter und einer Übergabestation, wobei die Übergabestation als Werkzeugmaschine ausgeführt ist, und
- Fig. 9:: ein zweites Ausführungsbeispiel eines Systems aus einem fahrerlosen Transporter und einer Übergabestation, wobei die Übergabestation als Materialschleuse ausgeführt ist.

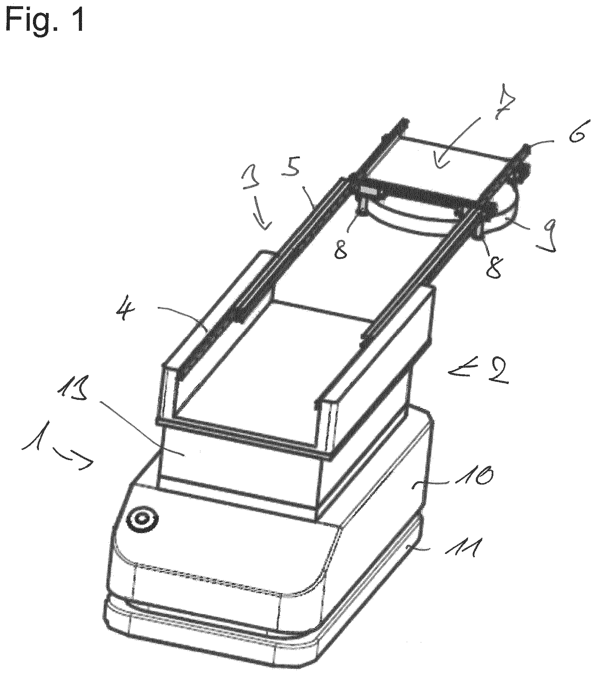

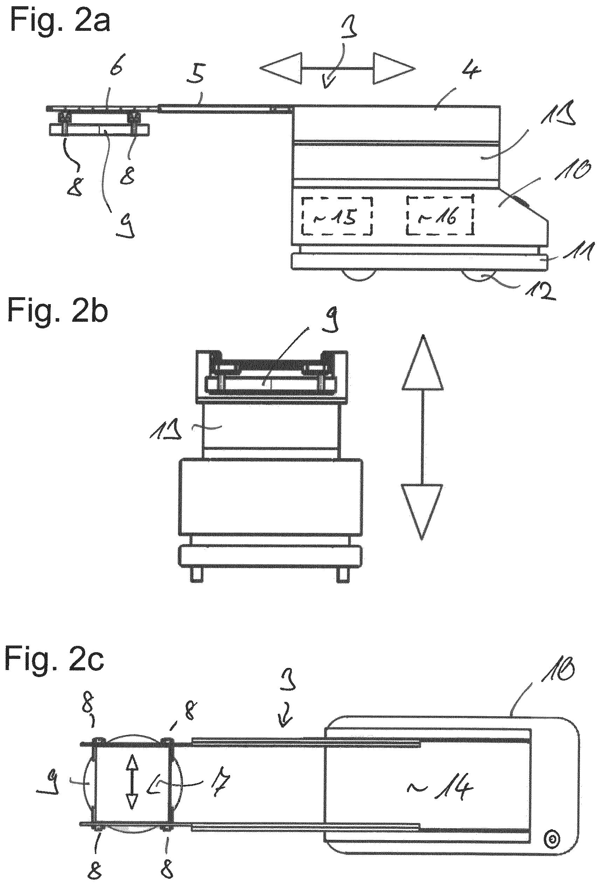

Fig. 1 bis 6 zeigen drei Ausführungsbeispiele eines erfindungsgemäßen fahrerlosen Transporters, welchen den im folgenden beschriebenen Grundaufbau aufweisen:
Die Transporter weisen ein Fahrgestell 12 auf, mit welchem sie verfahrbar sind. Im Ausführungsbeispiel weist das Fahrgestell 12 vier Räder auf, wobei mindestens zwei, bevorzugt vier Räder lenkbar sind. Das Fahrgestell wird durch einen in Fig. 2 nur schematisch dargestellten Antrieb des Transporters angetrieben.

Bevorzugt erfolgt der Antrieb elektrisch. Der Transporter weist bevorzugt einen Energiespeicher, insbesondere einen elektrischen Energiespeicher wie beispielsweise eine Batterie und/oder Supercaps auf, welcher die Energie für den Antrieb zur Verfügung stellt.

Der Transporter weist weiterhin eine Steuerung 16 auf, welche den Antrieb, die Lenkung und die Bewegungsachsen des Transporters ansteuert. Der Transporter kann dabei autonom und/oder teilautonom fahren und/oder durch ein Leitsystem angesteuert werden.

Der Transporter 1 weist eine Handling-Anordnung 2 mit einem Teleskopauszug 3 zum Bewegen von Transportgut 9 in horizontaler Richtung auf. Der Teleskopauszug weist mindestens ein längsverschieblich an einer Lagerschiene 4 gelagertes Teleskopelement 5, 6 auf. Im Ausführungsbeispiel sind zwei Teleskopschienen mit jeweils mindestens einem längsverschieblich an einer Lagerschiene 4 gelagerten Teleskopelement 5, 6 vorgesehen. An den Teleskopelementen 6 ist ein Handling-Element 7 vorgesehen, durch welches das Transportgut, insbesondere ein Werkstück, aufgenommen werden kann.

Im ersten Ausführungsbeispiel sind zwei aneinander längsverschieblich gelagerte Teleskopelemente 5 und 6 vorgesehen, im zweiten und dritten Ausführungsbeispiel lediglich ein Teleskopelement 6.

Die Handling-Anordnung 2 weist weiterhin eine Hebevorrichtung 13 auf, durch welche der Teleskopauszug 3 in der Höhe verfahren werden kann. Im Ausführungsbeispiel ist die Hebevorrichtung 13 als Hebebühne ausgestaltet, auf welcher der Teleskopauszug 3 angeordnet ist.

Der Transporter weist im Ausführungsbeispiel ein Chassis 10 auf, welches im Ausführungsbeispiel eine umlaufende Stoßstange 11 aufweist. Die Handling-Anordnung 2 und insbesondere die Hebevorrichtung ist auf der Oberseite des Chassis 10 angeordnet.

Der Teleskopauszug ist so an dem Transporter angeordnet, dass ein durch das Handling-Element des Teleskopauszugs aufgenommenes Transportgut sich in der eingezogenen Stellung des Teleskopauszugs innerhalb einer Grundfläche 14 des Transporters befindet, welche durch das Fahrwerk und/oder das Chassis definiert ist. Hierdurch wird ein sicherer Transport des Transportgutes erreicht, und die Gefahr eines Umkippens verringert.

Im Ausführungsbeispiel sind die Lagerschienen 4 an einer Innenseite einer äußeren Begrenzung angeordnet, insbesondere einem Wandelement, so dass die Teleskopelemente 5, 6 sich in der eingezogenen Stellung zwischen den äußeren Begrenzungen und insbesondere zwischen den Wandelementen angeordnet sind. Bevorzugt wird auch das Transportgut so aufgenommen, dass es sich in der eingezogenen Stellung des Teleskopauszugs zwischen den äußeren Begrenzungen und insbesondere zwischen den Wandelementen angeordnet ist.

Der oder die Teleskopauszüge weisen bevorzugt eine Grundfläche auf, welche mindestens 10 % der Grundfläche des Transporters einnimmt, weiter bevorzugt mindestens 25 % und 50 % der Grundfläche des Transporters. Die Grundfläche eines Teleskopauszugs wird dabei durch seine Breite mal Länge in der eingezogenen Stellung definiert.

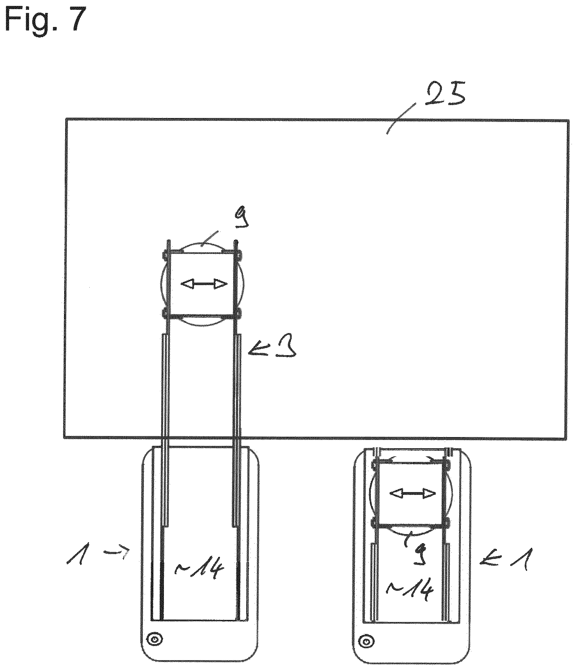

Der Teleskopauszug ist so angeordnet und ausgestaltet, dass ein an dem Handling-Element aufgenommenes Transportgut, insbesondere Werkstück, in eine Position neben der Grundfläche des Transporters bewegt werden kann. Wie in Fig. 7 schematisch dargestellt, kann das Transportgut so in den Bereich einer Übergabestation bewegt werden, wenn der Transporter neben dieser Übergabestation angeordnet ist, um das Transportgut dort zu übergeben, und/oder das Handling-Element in den Bereich einer Übergabestation bewegt werden, wenn der Transporter neben dieser Übergabestation angeordnet ist, um das Transportgut dort zu übernehmen.

Insbesondere erlaubt der Teleskopauszug, das Transportgut zu übernehmen oder zu übergeben, ohne dass der Transporter verfahren werden müsste.

Bei dem in Fig. 1 und 2 dargestellten ersten Ausführungsbeispiel ist nur ein Teleskopauszug 3 vorgesehen. Dieser erstreckt sich entlang der längeren Seite des Chassis des Transporters. Hierdurch ist eine sehr große Reichweite des Teleskopauszugs erreichbar.

Als Handling-Element 7 ist hier ein Greifer vorgesehen. Im Ausführungsbeispiel handelt es sich um einen mechanischen Greifer mit beweglichen Greifbacken 8, durch welche ein Werkstück 9 gegriffen werden kann.

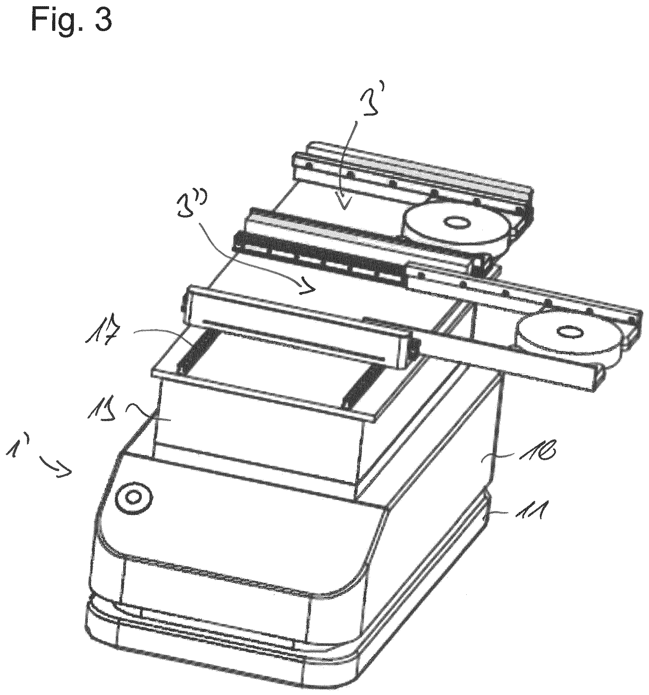

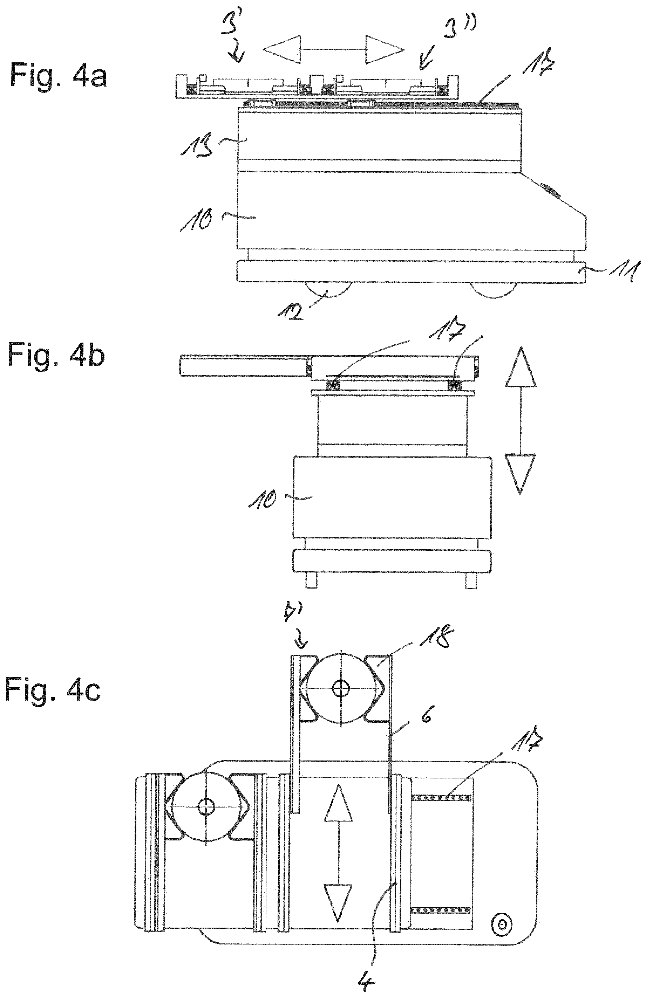

Bei dem in Fig. 3 und 4 dargestellten zweiten Ausführungsbeispiel sind zwei Teleskopauszüge 3' und 3" vorgesehen. Diese erlauben es, ein fertig bearbeitetes Werkstück zu übernehmen und ein zu bearbeitendes Werkstück zu übergeben.

Die Teleskopauszüge 3' und 3" sind parallel zueinander angeordnet. Im Ausführungsbeispiel sind sie nebeneinander platziert. Sie erstrecken sich dabei entlang einer kürzeren Seite des Transporters.

In einer alternativen Ausgestaltung könnten die beiden Teleskopauszüge 3' und 3" auch übereinander platziert sein. In diesem Fall können sich die Teleskopauszüge 3' und 3" auch entlang der längeren Seite des Transporters erstrecken, wie dies für den Teleskopauszug 3 aus dem ersten Ausführungsbeispiel bekannt ist.

In einer weiteren alternativen Ausgestaltung könnten die beiden Teleskopauszüge 3' und 3" auch miteinander fluchten, und daher in entgegengesetzte Richtungen ausziehbar sein.

Bei dem in Fig. 2 bis 6 dargestellten Ausführungsbeispielen weist die Handling-Anordnung eine weitere Bewegungsachse 17, 19 auf, durch welche der Teleskopauszug in einer horizontalen Ebene bewegt werden kann. Die weitere Bewegungsachse ist dabei so angeordnet, dass sich durch die weitere Bewegungsachse und den Teleskopauszug ein 2-dimensionaler Arbeitsraum für das Handling-Element ergibt. Ist weiterhin eine Hebevorrichtung vorgesehen, ergibt sich ein 3-dimensionaler Arbeitsraum.

Bei dem in Fig. 2 bis 4 dargestellten zweiten Ausführungsbeispiel ist die weitere Bewegungsachse als ein Quershuttle ausgeführt. Hierfür sind die Teleskopauszüge 3 auf einem Schlitten angeordnet, welcher entlang einer Führung in einer Richtung bewegbar ist, welche senkrecht auf der Auszugsrichtung der Teleskopauszüge steht.

Das Quershuttle erlaubt es, ohne den Transporter zu bewegen, abwechselnd den ersten und den zweiten Teleskopauszug 3' und 3" in die gleiche Position zu verfahren. Hierdurch kann nacheinander mit dem einen Teleskopauszug ein erstes Werkstück aus der Übergabeposition übernommen und mit dem zweiten Teleskopauszug ein zweites Werkstück in die gleiche Übergabeposition verbracht werden.

In einer mittleren Position des Quershuttles befinden sich dagegen beide Teleskopauszüge und/oder die an diesen aufgenommenen Werkstücke innerhalb der Grundfläche 14 des Transporters.

Bei dem in Fig. 3 und 4 gezeigten Ausführungsbeispiel ist das Handling-Element 3' wiederum als Greifer ausgeführt, welcher das Werkstück jedoch nicht umgreift, sondern seitlich klemmt.

Ein Quershuttle, wie es in Fig. 3 und 4 dargestellt ist, kann auch bei dem in Fig. 1 und 2 dargestellten Ausführungsbeispiel mit nur einem Teleskopauszug 3 eingesetzt werden, und bei dieser Ausgestaltung insbesondere für die Feinpositionierung des Werkstücks und/oder den Ausgleich von Fehlern bei der Positionierung des Transporters relativ zur Übergabestation.

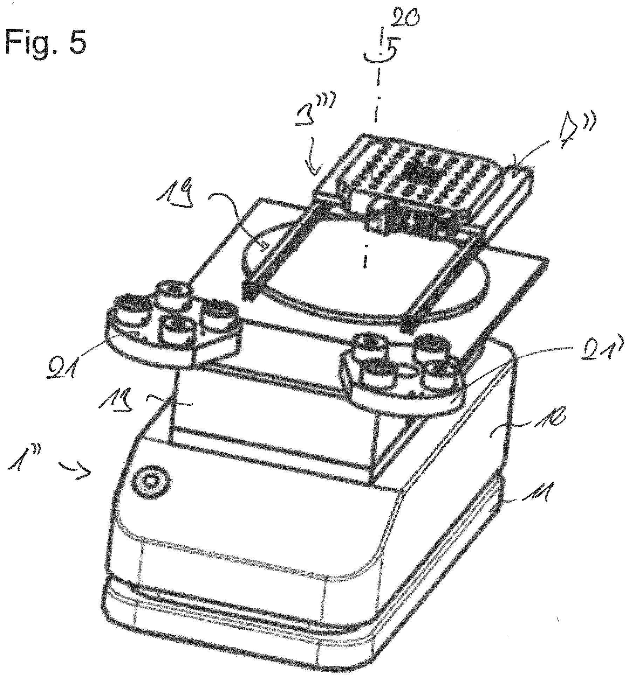

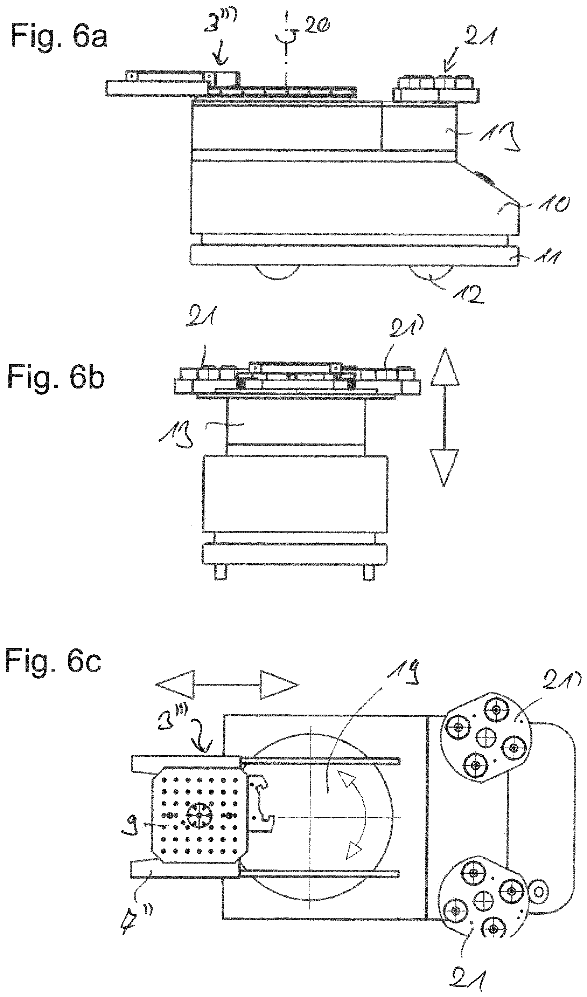

Bei dem in Fig. 5 und 6 dargestellten dritten Ausführungsbeispiel ist als weitere Bewegungsachse ein Drehtisch 19 vorgesehen, auf welchem der Teleskopauszug angeordnet ist und über welche dieser um eine vertikale Drehachse 20 verschwenkbar ist.

Bei dem in Fig. 5 und 6 dargestellten dritten Ausführungsbeispiel sind weiterhin zwei Ablageplätze 21 und 21' zum Ablegen von Transportgut, insbesondere Werkstücken vorgesehen. Die Ablageplätze und der Teleskopauszug sind so ausgestaltet, dass mittels des Teleskopauszuges und der weiteren Bewegungsachse Transportgut und insbesondere Werkstücke, welche von dem Handling-Element des Teleskopauszugs aufgenommen wurden, wahlweise auf einem der beiden Ablageplätze ablegbar ist und/oder von diesen durch das Handling-Element aufnehmbar sind.

Dies erlaubt es, mit nur einem Teleskopauszug ein erstes Werkstück von einer Übergabeposition zu übernehmen, auf einer der beiden Werkstückablagen abzulegen und von der anderen Werkstückablage ein zweites Werkstück aufzunehmen und zur Übergabeposition zu bringen. Zum eigentlichen Transport wird das jeweilige Werkstück dagegen bevorzugt durch das Handling-Element aufgenommen und befindet sich daher innerhalb der Grundfläche. Die Werkstückablagen sind aus Platzgründen dagegen am Rand der Grundfläche angeordnet.

Bei dem in Fig. 5 und 6 gezeigten Ausführungsbeispiel ist der Drehtisch so angeordnet, dass durch Drehen des Drehtisches der Teleskopauszug wahlweise auf die erste und die zweite Werkstückablage ausgerichtet werden kann.

Der Drehtisch 19 ist auf einer Seite der Grundfläche angeordnet, die beiden Werkstückablagen auf der gegenüberliegenden Seite der Grundfläche, wobei die längeren Seiten der Grundfläche von dem Drehtisch zu den Werkstückablagen verlaufen.

Die Übergabe der Werkstücke an die Übergabestation erfolgt in einer dritten Drehposition des Drehtisches, in welcher der Teleskopauszug parallel zu den längeren Seiten der Grundfläche ausgerichtet ist.

Ein Drehtisch, wie er in Fig. 5 und 6 dargestellt ist, kann aber auch unabhängig von dem Einsatz von Werkstückablagen eingesetzt werden. Beispielsweise kann auf einem solchen Drehtisch eine Anordnung von zwei in entgegengesetzte Richtungen ausziehbaren Teleskopauszügen angeordnet werden.

Ebenso ist es denkbar, einen Teleskopauszug mit mehreren darauf angeordneten Handling-Elementen einzusetzen.

Bei dem in Fig. 5 und 6 dargestellten Ausführungsbeispiel ist als Handling-Element 7" eine Gabel vorgesehen, durch welche eine Palette aufgenommen werden kann, auf welcher ein oder mehrere Werkstücke aufspannbar sind.

Selbstverständlich können die zu den einzelnen Ausführungsbeispielen beschriebenen Handling-Elemente auch mit den jeweils anderen Ausführungsbeispielen eingesetzt werden.

Fig. 7 zeigt die Übergabe eines Werkstücks von dem Transporter 1 zu einer Übergabestation 25. Rechts ist der Transporter mit dem Werkstück 9 in einer Transportposition gezeigt, in welcher der Teleskopauszug eingezogen ist und das am Handling-Element gehaltene Werkstück sich innerhalb der Grundfläche 14 befindet. Links ist der Teleskopauszug dagegen in einer Position gezeigt, in welcher das Werkstück durch Ausziehen des Teleskopauszugs 3 in eine Übergabeposition im Bereich der Übergabestation verbracht wurde.

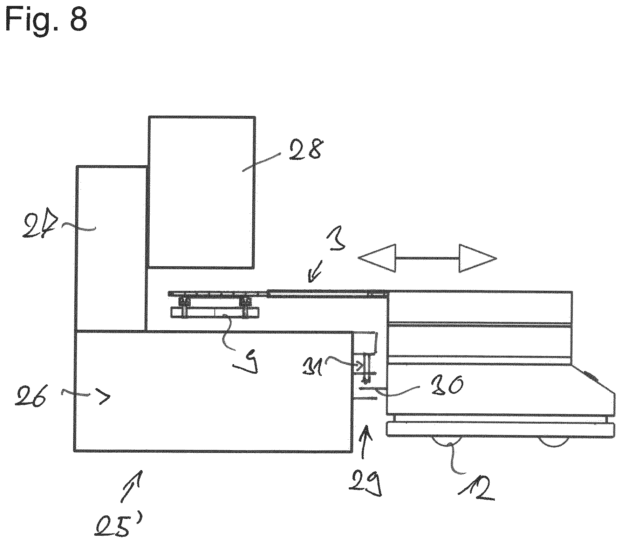

Fig. 8 zeigt schematisch einen Anwendungsfall, bei welchem es sich bei der Übergabestation 25' um eine Werkzeugmaschine, beispielsweise um eine Verzahnmaschine, handelt. Diese weist einen Maschinentisch 25 mit einer Werkstückaufnahme und einen Maschinenständer 27 mit einem Bearbeitungskopf zur Bearbeitung eines in der Werkstückaufnahme aufgenommenen Werkstücks auf. Der Teleskopauszug 3 erlaubt es nun, ein Werkstück über den Maschinentisch hinweg zur Werkstückaufnahme zu bewegen und/oder ein Werkstück von der Werkstückaufnahme aufzunehmen und zum Transporter zu bewegen. Im Ausführungsbeispiel weist die Werkzeugmaschine weiterhin einen Gegenständer 28 auf, wobei das Werkstück mittels des Teleskopauszugs zwischen die Werkstückaufnahme und den Gegenständer verfahren werden kann, um dort eingespannt zu werden.

Alternativ könnten die Werkstücke jedoch auch von und zu einer Übergabeanordnung übernommen und übergeben werden, welche separat zur Werkstückaufnahme vorgesehen ist. In diesem Fall ist bevorzugt eine Automation der Werkzeugmaschine vorgesehen, um Werkstücke von der Werkstückaufnahme zur Übergabeanordnung und zurück zu verbringen.

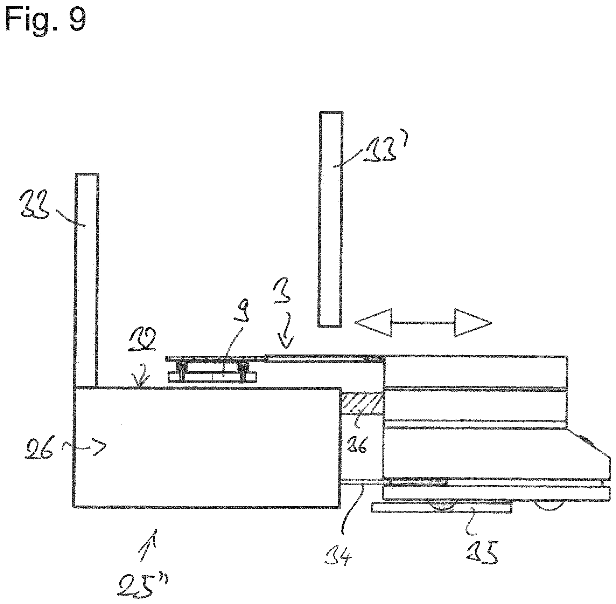

In Fig. 9 ist dagegen eine Anwendung gezeigt, in welcher der Teleskopauszug eingesetzt wird, um ein Werkstück 9 in den Bereich einer Materialschleuse 25" zu verbringen und/oder diese von dort aufzunehmen. Die Materialschleuse weist eine erste und eine zweite Schleusenwand 33 und 33' auf, welche das Innere der Schleuse von einem Bereich innerhalb einer Sicherheitsumzäunung und einem Bereich außerhalb einer Sicherheitsumzäunung zu trennen. Der Transporter kann dabei in einem Bereich außerhalb der Sicherheitsumzäunung neben der Materialschleuse angeordnet werden und Werkstücke durch Betätigung des Teleskopauszugs in das Innere der Materialschleuse verbringen und/oder von dort entnehmen. Hierfür wird eine Schleusenwand 33' so weit geöffnet, dass der Teleskopauszug in das Innere der Materialschleuse verfahren werden kann.

Zum Übergeben und/oder Übernehmen von Transportgut und insbesondere von Werkstücken wird der Transporter bevorzugt mittels des Fahrgestells in eine definierte Beschickungsposition neben der Übergabeposition verfahren. Die Übergabe und/oder Übernahme wird dann bevorzugt bei stehendem Transporter allein über die Bewegungsachsen der Handling-Anordnung vorgenommen.

In der Beschickungsposition kann der Transporter mechanisch mit der Übergabestation gekoppelt werden. Dies kann zum einen der Abstützung des Transporters und einer Sicherung gegen ein Umkippen bei einem Ausfahren des Teleskopauszugs dienen. Zum anderen kann eine Führung und/oder Zentrierung des Transporters erfolgen, so dass dieser in die Beschickungsposition geleitete wird.

In Fig. 8 ist eine Variante dargestellt, in welcher die mechanische Kopplung formschlüssig durch eine Kopplungsanordnung 29 erfolgt. der Transporter weist hierfür eine Öse auf, die Übergabestation einen Bolzen 31, welcher bevorzugt durch einen Antrieb bewegbar ist und mit der Öse koppelt.

In Fig. 9 ist eine Gabel 34 vorgesehen, welche den Transporter umgreift und/oder in beidseitig am Transporter angeordnete Führungen eingreift. Alternativ oder zusätzlich ist eine Führungsschiene 35 für die Räder des Fahrwerks vorgesehen, oder eine Rollenführung, durch welche der Transporter beidseitig in die Beschickungsposition geführt wird. Weiterhin alternativ oder zusätzlich kann am Boden eine Schiene vorgesehen sein, welche mit dem Transporter koppelt.

Weiterhin ist ein Anschlag 36 mit einer Abstützfläche an der Übergabestation vorgesehen, mit welcher der Transporter sich in einer Beschickungsposition auf der Übergabestation abstützt und welche ein Umkippen des Transporters verhindert.

Die Kopplung mit der Übergabestation kann dabei selbstverständlich auch mittelbar beispielsweise dadurch erfolgen, dass der Transporter mit einem Kopplungselement gekoppelt wird, welches wie die Übergabestation mit dem Boden fest verbunden ist.

## Patentansprüche

1. Fahrerloser Transporter (1) mit einem Fahrgestell (12), einem Antrieb und einer Steuerung, zum Transport von Transportgut, insbesondere zur Beschickung einer Übergabestation (25) mit einem oder mehreren Werkstücken, wobei der fahrerlose Transporter (1) eine Handling-Anordnung (2) mit einem Teleskopauszug (3) zum Bewegen des Transportgutes in horizontaler Richtung aufweist,
**dadurch gekennzeichnet,**
**dass** der fahrerlose Transporter (1) eine Kopplungseinrichtung (29) zur mechanischen Koppelung des Transporters (1) an einer Übergabestation (25) umfasst.

2. Fahrerloser Transporter nach Anspruch 1, wobei der fahrerlose Transporter (1) weiterhin eine Hebevorrichtung (13) zum Bewegen des Transportgutes in vertikaler Richtung aufweist, wobei bevorzugt der Teleskopauszug (3) durch die Hebevorrichtung (13) angehoben wird, wobei die Hebevorrichtung (13) bevorzugt als Hebebühne ausgestaltet ist, auf welcher der Teleskopauszug (3) montiert ist.

3. Fahrerloser Transporter nach Anspruch 1 oder 2, wobei der Teleskopauszug (3) so an dem fahrerlosen Transporter angeordnet ist, dass das Transportgut in Draufsicht bei eingezogenem Teleskopauszug innerhalb der durch das Fahrgestell (12) und/oder ein Chassis (10) des Transporters definierten Grundfläche (14) des Transporters angeordnet ist und durch Ausziehen des Teleskopauszugs (3) seitlich neben die Grundfläche (14) bewegbar ist.

4. Fahrerloser Transporter nach einem der vorangegangenen Ansprüche, wobei an dem Teleskopauszug (3) ein Handling-Element (7) zum Greifen und/oder Aufnehmen des Transportguts angeordnet ist, insbesondere ein Greifer und/oder eine Gabel.

5. Fahrerloser Transporter nach einem der vorangegangenen Ansprüche, wobei die Handling-Anordnung (2) mindestens eine weitere Bewegungsachse (17, 19) zur Bewegung des Transportgutes in einer horizontalen Ebene umfasst, insbesondere eine vertikale Drehachse (19) und/oder ein Quershuttle (17), wobei die weitere Bewegungsachse bevorzugt den Teleskopauszug (3) bewegt und/oder zwischen der Hebevorrichtung und dem Teleskopauszug angeordnet ist.

6. Fahrerloser Transporter nach einem der vorangegangenen Ansprüche, wobei die Handling-Anordnung (2) mindestens zwei Teleskopauszüge (3', 3") umfasst, wobei die Teleskopauszüge (3', 3") bevorzugt parallele Auszugsrichtungen aufweisen und/oder bevorzugt nebeneinander, übereinander oder fluchtend zueinander angeordnet sind.

7. Fahrerloser Transporter nach einem der vorangegangenen Ansprüche, mit mindestens einem und bevorzugt mindestens zwei Ablageplätzen (21, 21') für Transportgut, wobei bevorzugt die Bewegungsachsen (13, 17, 19) der Handling-Anordnung (2) so ausgeführt sind, dass Transportgut mittels des Teleskopauszugs (3) auf einem Ablageplatz (21, 21') ablegbar und/oder von diesem aufnehmbar ist, wobei der Teleskopauszug (3) bevorzugt über eine vertikale Drehachse (19) zu dem Ablageplatz und/oder den Ablageplätzen hin verschwenkbar ist.

8. Fahrerloser Transporter nach einem der vorangegangenen Ansprüche, wobei die Kopplungseinrichtung (29) der Zentrierung und/oder der Abstützung des Transporters (1) dient, wobei bevorzugt ein Sensor zum Erfassen der Kopplung vorgesehen ist und/oder die Steuerung so eingerichtet ist, dass ein Transportgut durch den Teleskopauszug (3) erst nach erfolgter Kopplung außerhalb der Grundfläche (14) des Transporters bewegbar ist und/oder der Teleskopauszug (3) erst nach erfolgter Kopplung ausziehbar ist.

9. Fahrerloses Transportsystem mit mindestens einem fahrerlosen Transporter nach einem der vorangegangenen Ansprüche und mindestens einer Übergabestation (25), wobei die Übergabestation (25) eine Kopplungsanordnung (31, 35, 36) zur mechanischen Ankopplung des Transporters aufweist,
wobei bevorzugt der fahrerlose Transporter (1) und die Übergabestation (25) so ausgestaltet sind, dass durch den Transporter transportiertes Transportgut mittels des Teleskopauszugs (3) von einer Transportposition im Bereich des Transporters (1) zu einer Übergabeposition im Bereich der Übergabestation (25) verbringbar ist und/oder Transportgut aus einer Übergabeposition im Bereich der Übergabestation (25) mittels des Teleskopauszugs (3) zu einer Transportposition im Bereich des Transporters (1) verbringbar ist.

10. Fahrerloses Transportsystem nach Anspruch 9, wobei es sich bei der Übergabestation (25) um eine Werkzeugmaschine und/oder eine Materialschleuse und/oder einen Speicher und/oder ein Lagerregal handelt.

11. Fahrerloses Transportsystem nach Anspruch 9 oder 10, wobei die Kopplungsanordnung (29) der Zentrierung und/oder der Abstützung des Transporters (1) dient und insbesondere ein Kippen des Transporters (1) bei einem Ausziehen des Teleskopauszugs (3) verhindert.

12. Fahrerloses Transportsystem nach einem der vorangegangenen Ansprüche, wobei der Transporter (1) bevorzugt so angesteuert wird, dass er in einem ersten Schritt mittels des Fahrgestells in eine Beschickungsposition verfährt und in einem zweiten Schritt ohne eine Betätigung des Fahrgestells (12) eine Übergabe von Transportgut in die Übergabestation (25) vornimmt, insbesondere durch Betätigung des Teleskopauszugs (3) und/oder der Hebevorrichtung (13), wobei bevorzugt Ungenauigkeiten beim Erreichen der Beschickungsposition durch mindestens eine weitere Bewegungsachse (17, 19) des Transporters ausgeglichen werden.

13. Verfahren zum Betrieb eines fahrerlosen Transportsystems mit mindestens einem fahrerlosen Transporter (1) nach einem der Ansprüche 1 bis 8 und mindestens einer Übergabestation (25), mit den Schritten:
- Verfahren eines fahrerlosen Transporters (1) in eine Beschickungsposition, in welcher der Transporter (1) neben einer Übergabestation (25) angeordnet ist,
- Betätigen des Teleskopauszugs (3) zur Beschickung der Übergabestation (25) mit Transportgut und/oder zur Entnahme von Transportgut aus der Übergabestation,
**dadurch gekennzeichnet,**
**dass** der Transporter (1) in der Beschickungsposition mechanisch mit der Übergabestation (25) gekoppelt wird.

14. Verfahren nach Anspruch 13, wobei der Transporter (1) der Übergabestation (25) in einem ersten Schritt ein bearbeitetes Werkstück entnimmt und in einem zweiten Schritt ein nicht bearbeitetes Werkstück übergibt, wobei bevorzugt zwischen den beiden Schritten keine Bewegung des Transporters (1) über sein Fahrgestell (12) erfolgt und/oder der Transporter fest in seiner Beschickungsposition verbleibt.

## Claims

1. Driverless transporter (1), which comprises an undercarriage (12), a drive and a control unit, for transporting goods, in particular for loading a transfer station (25) with one or a plurality of workpieces, wherein the driverless transporter (1) comprises a handling arrangement (2) with a telescopic extension (3) for moving the transported goods in a horizontal direction,
**characterized in that**
the driverless transporter (1) comprises coupling unit (29) for mechanically coupling the transporter (1) to a transfer station (25).

2. Driverless transporter according to claim 1, wherein the driverless transporter (1) further comprises a lifting device (13) for moving the transported goods in a vertical direction, wherein the telescopic extension (3) is preferably lifted by the lifting device (13), wherein the lifting device (13) is preferably configured as a lifting platform on which the telescopic extension (3) is mounted.

3. Driverless transporter according to claim 1 or 2, wherein the telescopic extension (3) is arranged on the driverless transporter such that, when seen in a top view, the transported goods are arranged, in the retracted condition of the telescopic extension, within the base area (14) of the transporter defined by the undercarriage (12) and/or a chassis (10) of the transporter and can be moved to a position laterally next to the base area (14) by pulling out the telescopic extension (3).

4. Driverless transporter according to any one of the preceding claims, wherein the telescopic extension (3) has arranged thereon a handling element (7) for gripping and/or picking up the transported goods, in particular a gripper and/or a fork.

5. Driverless transporter according to any one of the preceding claims, wherein the handling arrangement (2) comprises at least one further axis of movement (17, 19) for moving the transported goods in a horizontal plane, in particular a vertical axis of rotation (19) and/or a transverse shuttle (17), wherein the further axis of movement preferably moves the telescopic extension (3) and/or is arranged between the lifting device and the telescopic extension.

6. Driverless transporter according to any one of the preceding claims, wherein the handling arrangement (2) comprises at least two telescopic extensions (3', 3"), wherein the telescopic extensions (3', 3") preferably have parallel pull-out directions and/or are preferably arranged side by side, one above the other or in alignment with each other.

7. Driverless transporter according to any one of the preceding claims, comprising at least one, and preferably at least two places (21, 21') for depositing transported goods, wherein the axes of movement (13, 17, 19) of the handling arrangement (2) are preferably configured such that transported goods can be deposited on and/or picked up from a deposit place (21, 21') by means of the telescopic extension (3), wherein the telescopic extension (3) is preferably pivotable via a vertical axis of rotation (19) towards the deposit place and/or the deposit places.

8. Driverless transporter according to any one of the preceding claims, wherein the coupling unit (29) preferably serves to center and/or support the transporter (1), wherein, preferably, a sensor is provided for detecting that coupling has taken place and/or the control unit is configured such that transported goods cannot be moved by the telescopic extension (3) outside a location the base area (14) of the transporter only after coupling has taken place and/or the telescopic extension (3) can be pulled out only after coupling has taken place.

9. Driverless transport system comprising at least one driverless transporter according to any one of the preceding claims and at least one transfer station (25), wherein the transfer station (25) comprises a coupling arrangement (31, 35, 36) for mechanically coupling the transporter,
wherein, preferably, the driverless transporter (1) and the transfer station (25) are configured such that goods transported by the transporter can be moved by means of the telescopic extension (3) from a transport position in the area of the transporter (1) to a transfer position in the area of the transfer station (25) and/or transported goods can be moved by means of the telescopic extension (3) from a transfer position in the area of the transfer station (25) to a transport position in the area of the transporter (1).

10. Driverless transport system according to claim 9, wherein the transfer station (25) is a machine tool and/or a material lock and/or a storage facility and/or a storage rack.

11. Driverless transport system according to claim 9 or 10, wherein the coupling arrangement (29) is preferably used for centering and/or supporting the transporter (1) and preventing, in particular, a tilting of the transporter (1) during pulling out of the telescopic extension (3).

12. Driverless transport system according to any one of the preceding claims, wherein the transporter (1) is preferably controlled such that, in a first step, it moves to a loading position by means of the undercarriage and, in a second step, it transfers, without the undercarriage (12) being operated, the transported goods to the transfer station (25), in particular by actuating the telescopic extension (3) and/or the lifting device (13), inaccuracies in the process of reaching the loading position being preferably compensated for by at least one further axis of movement (17, 19) of the transporter.

13. Method of operating a driverless transport system comprising at least one driverless transporter (1) according to any one of the claims 1 to 8 and at least one transfer station (25), the method comprising the following steps:
- moving a driverless transporter (1) to a loading position, at which the transporter (1) is arranged next to a transfer station (25),
- actuating the telescopic extension (3) for loading the transfer station (25) with transported goods and/or for removing transported goods from the transfer station,
**characterized in that**
the transporter (1) is mechanically coupled to the transfer station (25) at the loading position.

14. Method according to claim 13, wherein the transporter (1) removes a processed workpiece from the transfer station (25) in a first step and transfers a non-processed workpiece thereto in a second step, wherein, preferably, no movement of the transporter (1) via its undercarriage (12) takes place between the two steps and/or the transporter remains fixedly at its loading position.

## Revendications

1. Transporteur sans conducteur (1) avec un chariot (12), un entraînement et une commande, pour le transport de produits à transporter, notamment pour le chargement d'un poste de transfert (25) avec une ou plusieurs pièces, le transporteur sans conducteur (1) présentant un agencement de manutention (2) avec une extension télescopique (3) pour déplacer le produit à transporter dans la direction horizontale,
**caractérisé en ce que**
le transporteur sans conducteur (1) comprend un appareil de couplage (29) pour le couplage mécanique du transporteur (1) à un poste de transfert (25).

2. Transporteur sans conducteur selon la revendication 1, le transporteur sans conducteur (1) présentant en outre un dispositif de levage (13) pour déplacer le produit à transporter dans la direction verticale, l'extension télescopique (3) étant de préférence soulevée par le dispositif de levage (13), le dispositif de levage (13) étant de préférence conçu sous forme de plate-forme de levage sur laquelle l'extension télescopique (3) est montée.

3. Transporteur sans conducteur selon la revendication 1 ou 2, l'extension télescopique (3) étant agencée sur le transporteur sans conducteur de telle sorte que le produit à transporter est agencé, en vue de dessus lorsque l'extension télescopique est rétractée, à l'intérieur de la surface de base (14) du transporteur définie par le chariot (12) et/ou un châssis (10) du transporteur et peut être déplacé latéralement à côté de la surface de base (14) par extension de l'extension télescopique (3).

4. Transporteur sans conducteur selon l'une quelconque des revendications précédentes, un élément de manutention (7) étant agencé sur l'extension télescopique (3) pour saisir et/ou recevoir le produit à transporter, notamment un grappin et/ou une fourche.

5. Transporteur sans conducteur selon l'une quelconque des revendications précédentes, l'agencement de manutention (2) comprenant au moins un autre axe de déplacement (17, 19) pour déplacer le produit à transporter dans un plan horizontal, notamment un axe de rotation vertical (19) et/ou une navette transversale (17), l'autre axe de déplacement déplaçant de préférence l'extension télescopique (3) et/ou étant agencé entre le dispositif de levage et l'extension télescopique.

6. Transporteur sans conducteur selon l'une quelconque des revendications précédentes, l'agencement de manutention (2) comprenant au moins deux extensions télescopiques (3', 3"), les extensions télescopiques (3', 3") présentant de préférence des directions d'extension parallèles et/ou étant de préférence agencées l'une à côté de l'autre, l'une au-dessus de l'autre ou en alignement l'une avec l'autre.

7. Transporteur sans conducteur selon l'une quelconque des revendications précédentes, avec au moins un et de préférence au moins deux emplacements de dépôt (21, 21') pour les produits à transporter, les axes de déplacement (13, 17, 19) de l'agencement de manutention (2) étant de préférence réalisés de telle sorte que les produits à transporter peuvent être déposés sur un emplacement de dépôt (21, 21') au moyen de l'extension télescopique (3) et/ou peuvent être prélevés de celui-ci, l'extension télescopique (3) pouvant de préférence pivoter vers l'emplacement de dépôt et/ou les emplacements de dépôt par l'intermédiaire d'un axe de rotation vertical (19).

8. Transporteur sans conducteur selon l'une quelconque des revendications précédentes, l'appareil de couplage (29) servant au centrage et/ou à l'appui du transporteur (1), un capteur étant de préférence prévu pour détecter le couplage et/ou la commande étant adaptée de telle sorte qu'un produit à transporter ne peut être déplacé par l'extension télescopique (3) hors de la surface de base (14) du transporteur qu'après le couplage et/ou l'extension télescopique (3) ne peut être étendue qu'après le couplage.

9. Système de transport sans conducteur avec au moins un transporteur sans conducteur selon l'une quelconque des revendications précédentes et au moins un poste de transfert (25), le poste de transfert (25) présentant un agencement de couplage (31, 35, 36) pour le couplage mécanique du transporteur,
le transporteur sans conducteur (1) et le poste de transfert (25) étant de préférence conçus de telle sorte que les produits à transporter transportés par le transporteur peuvent être amenés au moyen de l'extension télescopique (3) d'une position de transport dans la zone du transporteur (1) à une position de transfert dans la zone du poste de transfert (25) et/ou que les produits à transporter peuvent être amenés d'une position de transfert dans la zone du poste de transfert (25) au moyen de l'extension télescopique (3) à une position de transport dans la zone du transporteur (1).

10. Système de transport sans conducteur selon la revendication 9, le poste de transfert (25) consistant en une machine-outil et/ou un sas de matériaux et/ou un magasin et/ou un rayonnage de stockage.

11. Système de transport sans conducteur selon la revendication 9 ou 10, l'agencement de couplage (29) servant au centrage et/ou au soutien du transporteur (1) et empêchant notamment un basculement du transporteur (1) lors d'une extension de l'extension télescopique (3).

12. Système de transport sans conducteur selon l'une quelconque des revendications précédentes, le transporteur (1) étant de préférence commandé de telle sorte que, dans une première étape, il se déplace dans une position de chargement au moyen du chariot et, dans une deuxième étape, il effectue un transfert de produits à transporter dans le poste de transfert (25) sans actionner le chariot (12), notamment en actionnant l'extension télescopique (3) et/ou le dispositif de levage (13), les imprécisions lors de l'atteinte de la position de chargement étant de préférence compensées par au moins un autre axe de déplacement (17, 19) du transporteur.

13. Procédé d'exploitation d'un système de transport sans conducteur avec au moins un transporteur sans conducteur (1) selon l'une quelconque des revendications 1 à 8 et au moins un poste de transfert (25), avec les étapes suivantes :
- le déplacement d'un transporteur sans conducteur (1) dans une position chargement dans laquelle le transporteur (1) est agencé à côté d'un poste de transfert (25),
- l'actionnement de l'extension télescopique (3) pour charger le poste de transfert (25) avec des produits à transporter et/ou pour prélever des produits à transporter du poste de transfert,
**caractérisé en ce que**
le transporteur (1) est couplé mécaniquement au poste de transfert (25) dans la position de chargement.

14. Procédé selon la revendication 13, le transporteur (1) prélevant une pièce usinée au poste de transfert (25) dans une première étape et transférant une pièce non usinée dans une deuxième étape, aucun mouvement du transporteur (1) n'étant effectué sur son chariot (12) entre les deux étapes et/ou le transporteur restant fixe dans sa position de chargement.
